# EUROPÄISCHE PATENTANMELDUNG

(11) **EP 1 694 100 A2**
(43) Veröffentlichungstag der Anmeldung: **23.08.2006**
(21) Anmeldenummer: 06003476.6
(22) Anmeldetag: 21.02.2006
(51) Int. Cl.: H05B 37/02

(54) **Vorrichtung zur Steuerung einer Beleuchtungseinrichtung**

(30) Priorität: 21.02.2005 DE 202005002876 U; 24.11.2005 DE 202005018365 U
(71) Anmelder: Light & More Beleuchtungssysteme GmbH, 32130 Enger (DE)
(72) Erfinder: Kaufmann, Iris, 32049 Herford (DE)
(74) Vertreter: Möller, Friedrich

(57) **Zusammenfassung**

Wenn Beleuchtungseinrichtungen bei Dunkelheit eingeschaltet werden, geben sie üblicherweise die maximale Lichtmenge ab, wodurch Personen geblendet werden. Dieses wird als sehr unangenehm empfunden.

Die Erfindung schafft eine Vorrichtung, die die Lichtabgabe einer Beleuchtungseinrichtung bei Dunkelheit oder in der Dämmerung so steuert, dass eine Blendung vermieden wird. Die Vorrichtung zeichnet sich dadurch aus, dass bei einer unterhalb eines Grenzwerts liegenden Umgebungshelligkeit von einer Steuerungseinrichtung (10) eine Lichtquelle (19) mit verringerter Leuchtstärke einschaltbar ist.

## Beschreibung

Die Erfindung betrifft eine Vorrichtung zur Steuerung einer Beleuchtungseinrichtung gemäß dem Oberbegriff des Anspruchs 1.

Vorrichtungen der hier angesprochenen Art dienen dazu, den Lichtkomfort vor allem im privaten, aber auch im gewerblichen Bereich, zu erhöhen. Es sind verschiedenartigste Vorrichtungen dieser Art bekannt, deren Ziel es stets ist, die Intensität des von einer Beleuchtungseinrichtung abgestrahlten Lichts an die Umgebungshelligkeit anzupassen. Dazu wird von einem Lichtsensor die Umgebungshelligkeit erfasst und bei abnehmender Helligkeit die Leuchtstärke der Beleuchtungseinrichtung abgesenkt.

Wird in der Dämmung oder Dunkelheit die Beleuchtungseinrichtung eingeschaltet, gibt diese die maximale Lichtmenge ab. Personen werden dadurch geblendet. Als besonders unangenehm wird es empfunden, wenn nach dem Aufwachen in einem dunklen oder nur wenig Umgebungshelligkeit aufweisenden Raum eine üblicherweise zur ausreichenden Beleuchtung dieses Raums vorgesehene Beleuchtungseinrichtung eingeschaltet wird.

Der Erfindung liegt nun die Aufgabe zugrunde, eine Vorrichtung zur Steuerung einer Beleuchtungseinrichtung zu schaffen, die automatisch bei geringer Umgebungshelligkeit oder Dunkelheit eine Lichtüberreizung, insbesondere Blendung, vermeidet.

Eine Vorrichtung zur Lösung dieser Aufgabe weist die Merkmale des Anspruchs 1 auf. Dadurch, dass bei einer unterhalb eines Grenzwerts liegenden Umgebungshelligkeit von der Steuerungseinrichtung der erfindungsgemäßen Vorrichtung die Beleuchtungseinrichtung mit verminderter elektrischer Energie versorgbar ist oder eine weniger helle Leuchtquelle der Beleuchtungseinrichtung einschaltbar ist, wird bei Dunkelheit oder weniger Umgebungslicht von der Beleuchtungseinrichtung automatisch nur wenig Leicht erzeugt. Das bei Dunkelheit erzeugte Licht ist nur so stark, dass keine Lichtüberreizung erfolgt. Blendungen werden so zuverlässig vermieden. Die erfindungsgemäße Vorrichtung reduziert somit das von mindestens einer Lichtquelle der Beleuchtungseinrichtung abgestrahlte künstliche Licht auf ein Minimum, das zur Orientierung ausreicht, aber keine Lichtüberreizung von Personen hervorruft.

Gemäß einer Ausgestaltung der erfindungsgemäßen Vorrichtung weist die Beleuchtungseinrichtung mindestens zwei Lichtquellen unterschiedlicher Helligkeiten auf. Dabei dient mindestens eine Lichtquelle zur Erzeugung von deutlich weniger Licht als die mindestens eine andere Lichtquelle. Eine Steuerungseinrichtung mit einem Lichtsensor betätigt in Abhängigkeit von der vom Lichtsensor erfassten Umgebungshelligkeit individuell die eine oder andere Lichtquelle. Dabei schaltet die Steuerungseinrichtung die ein schwaches Licht abgebende elektrische Lichtquelle dann ein, wenn der Lichtsensor eine Umgebungshelligkeit feststellt, die unterhalb eines bestimmten, vorzugsweise einstellbaren, Grenzwerts liegt, also bei dunkler oder nahezu dunkler Umgebung. Bei heller Umgebung stellt der Lichtsensor eine über dem Grenzwert liegende Umgebungshelligkeit fest, woraufhin die Steuerungseinrichtung mindestens eine stärkere Lichtquelle einschaltet, die üblicherweise ausreicht, um einen Raum ausreichend zu beleuchten. Dabei kann die zur Abgabe nur eines schwachen Lichts dienende Lichtquelle von der Steuerungseinrichtung abgeschaltet werden, sie kann aber auch zusätzlich in Betrieb bleiben. Denkbar ist es auch, bei über dem Grenzwert liegender Umgebungshelligkeit die zum schwachen Ausleuchten eines Raums vorgesehene Lichtquelle umzuschalten bzw. umzusteuern auf eine maximale Lichtabgabe. Bei einer solchen Vorrichtung können zur Erzeugung eines starken und eines schwachen Lichts nach unterschiedlichen Prinzipien arbeitende elektrische Lichtquellen eingesetzt werden. Die elektrische Energieversorgung dieser Lichtquellen kann dann voneinander abweichen, insbesondere die Spannung.

Gemäß einer alternativen Ausgestaltung der Vorrichtung wird von der Schaltungseinrichtung in Abhängigkeit von der mittels des Lichtsensors erfassten Umgebungshelligkeit die Beleuchtungseinrichtung mit entsprechend veränderter Stromversorgung, insbesondere sich änderndem Strom und/oder sich ändernder Spannung, versorgt. In diesem Falle braucht die Beleuchtungseinrichtung nur eine einzige elektrische Lichtquelle aufzuweisen. Diese wird mit geringer elektrischer Energie versorgt, wenn beim Einschalten der Beleuchtungseinrichtung der Lichtsensor feststellt, dass die Umgebungshelligkeit einen vorgegebenen Wert unterschritten hat oder es dunkel ist. Die Lichtquelle gibt dann eine geringere Lichtmenge ab. Bei über dem Grenzwert liegender Umgebungshelligkeit wird hingegen die Lichtquelle mit maximaler elektrischer Energie versorgt zur Erzeugung einer größtmöglichen Lichtstärke. In analoger Weise wird vorgegangen, wenn die Beleuchtungseinrichtung mehr als eine elektrische Lichtquelle aufweist.

Es ist weiterhin vorgesehen, der Schaltungseinrichtung mindestens einen manuell betätigbaren Schalter zuzuordnen. Dadurch kann die Steuerungseinrichtung aktiviert werden und die Beleuchtungseinrichtung ein der Umgebungshelligkeit entsprechendes stärkeres oder schwächeres Licht abgeben. Vorzugsweise ist die Schaltungseinrichtung so ausgebildet, dass bei einmaliger Betätigung des Schalters der Lichtsensor aktiviert wird. Je nachdem, ob die Umgebungshelligkeit über oder unter einem vorgegebenen Grenzwert liegt, wird dann minimales Nachtlicht oder ein stärkeres Licht, insbesondere ein Taglicht oder ein Arbeitslicht, erzeugt. Nachdem sich die Augen an das Licht gewöhnt haben, ist es mit der Schaltungseinrichtung weiterhin möglich, durch mehrmaliges kurz aufeinanderfolgendes Betätigen des Schalters den Lichtsensor zu deaktivieren. Für diesen Fall ist die Schaltungseinrichtung so ausgebildet, dass bei deaktiviertem Lichtsensor stets volles Licht von mindestens einer Lichtquelle abgegeben wird, auch wenn der Lichtsensor Dunkelheit oder nur geringes Umgebungslicht detektiert. Bei mehreren Lichtquellen kann es vorgesehen sein, alle Lichtquellen gleichzeitig mit maximaler Leuchtstärke zu betreiben. Dabei kann es sich zusätzlich auch um die Lichtquelle handeln, die im Nachtlichtmodus nur ein sehr geringes Licht abgibt.

Der Grenzwert der Umgebungshelligkeit, bei dessen Unterschreiten der Lichtsensor ein geringes Licht erzeugt, ist gemäß einer Weiterbildung der Erfindung individuell veränderbar. Vorzugsweise ist der Grenzwert stufenlos veränderbar. Der eingestellte bzw. individuell einprogrammierte Grenzwert wird jeweils abgespeichert. Auf diese Weise kann der Benutzer den Bedürfnissen entsprechend bestimmen, ab welcher Umgebungshelligkeit die Beleuchtungseinrichtung Taglicht oder ein geringeres Arbeits- bzw. Nachlicht erzeugt.

Es ist des Weiteren möglich, die Zeitspanne, innerhalb derer durch mehrmaliges kurz aufeinanderfolgendes Betätigen des Schalters der Lichtsensor zur Erzeugung eines Taglichts auch bei unter dem Grenzwert liegendem Umgebungslicht deaktiviert wird, individuell zu verändern. Auch hier erfolgt vorzugsweise eine stufenlose Veränderung der Zeitspanne, so dass die Beleuchtungseinrichtung an die Bedürfnisse des Benutzers individuell anpassbar ist. Der jeweils eingestellte bzw. einprogrammierte Zeitabstand wird wiederum gespeichert.

Die Schaltungseinrichtung ist vorzugsweise so ausgebildet, dass sie neben dem Lichtsensor eine Auswerteinheit aufweist. Die Auswerteinheit ist dem Lichtsensor vorzugsweise so zugeordnet, dass sie das von diesem abgegebene Signal auswertet. Diese Auswertung geschieht derart, dass die Auswerteinheit ein definiertes Signal erzeugt, wenn die Umgebungshelligkeit über oder unter dem Grenzwert liegt. Vorzugsweise erzeugt die Auswerteinheit nur dann ein Signal, wenn die Umgebungshelligkeit unter dem Grenzwert liegt, also es dunkel oder nahezu dunkel ist. Dieses von der Auswerteinheit bei Dunkelheit oder geringem Umgebungslicht erzeugte Signal dient dazu, die Beleuchtungseinrichtung im Nachtmodus zu betreiben, indem beispielsweise nur eine von mehreren elektrischen Leuchtquellen eingeschaltet wird, mindestens eine nur ein geringes Licht abgebende Lichtquelle aktiviert wird oder mindestens eine Lichtquelle mit einer reduzierten Spannung und/oder einem reduzierten Strom versorgt wird, damit diese oder gegebenenfalls auch jede Lichtquelle nur ein schwaches Nachtlicht erzeugt.

Bei einer bevorzugten Ausgestaltung der Vorrichtung weist die Schaltungseinrichtung mindestens zwei Zeitglieder (Timer) auf. Ein erstes Zeitglied ist so ausgebildet, dass es immer ein Signal abgibt, wenn der Schalter betätigt wird, während das andere (zweite) Zeitglied nur ein Signal, vorzugsweise einen Impuls, abgibt, wenn innerhalb einer bestimmten Zeitspanne der Schalter mindestens zweimal betätigt worden ist. Auf diese Weise ist es möglich, die unter Einbeziehung des Lichtsensors im dunklen Raum aktivierte Nachtbeleuchtung zu umgehen, nämlich quasi zu überbrücken, indem die Beleuchtungseinrichtung bei Bedarf auch in dunklen Räumen das volle Licht abgeben kann.

Es ist weiterhin vorgesehen, dem ersten Zeitglied die Auswerteinheit des Lichtsensors derart zuzuordnen, dass ein Signal des ersten Zeitglieds und der Auswerteinheit zu einem Logikglied, insbesondere einem UND-Gatter, geführt ist, das ein Ausgangssignal erzeugt, wenn der Schalter nur einmal innerhalb eines bestimmten Zeitintervalls betätigt worden ist und die vom Lichtsensor erfasste Umgebungshelligkeit unter dem Grenzwert liegt. Auf diese Weise ist es möglich, ein vom Lichtsensor abgegebenes Signal zum Einschalten des schwächeren Nachtlichts "auszublenden", wenn das erste Zeitglied aufgrund einer kurz aufeinanderfolgenden Mehrfachbetätigung des Schalters kein Signal erzeugt, weil dann von dem eine UND-Verknüpfung erfordernden Logikglied kein Signal abgegeben wird.

Das zweite Zeitglied ist so ausgebildet, dass es ein Signal, vorzugsweise nur einen kurzen Impuls, erzeugt, wenn der Schalter innerhalb eines bestimmten Zeitintervalls mehrmals aufeinanderfolgend betätigt worden ist. Aufgrund dieses Signals oder des Impulses des zweiten Zeitglieds kann die Beleuchtungseinrichtung auch dann auf maximale Helligkeit geschaltet werden, wenn die Umgebungshelligkeit unter dem Grenzwert liegt, also bei Dunkelheit oder schwacher Umgebungshelligkeit.

Gemäß einer Weiterbildung der Vorrichtung ist dem Logikglied (UND-Gatter) und dem zweiten Zeitglied ein Signalspeicher nachgeschaltet. Der Signalspeicher weist einen Eingang für das Signal des zweiten Zeitglieds und einen Eingang für das Signal der Auswerteeinheit des Lichtsensors auf. Vorzugsweise handelt es sich beim Eingang des zweiten Zeitglieds um einen Steuereingang und beim Eingang des Logikgliedes um einen Dateneingang. In Abhängigkeit vom Signal am Dateneingang und vom Impuls am Steuereingang, erzeugt der Signalspeicher ein entsprechendes Ausgangssignal. Der Signalspeicher überträgt das Signal des Logikgliedes am Dateneingang zum Ausgang des Signalspeichers. In diesem Falle gibt der Signalspeicher ein entsprechendes Ausgangssignal ab. Wenn das zweite Zeitglied kein Signal erzeugt und somit der Signalspeicher über den Steuereingang kein Signal erhält, wird das zuletzt vom Signalspeicher abgegebene Signal gespeichert. Auf diese Weise kann vom Signalspeicher auf einfache Weise ein Ausgangssignal erzeugt werden, dass dem folgenden Teil der Schaltungseinrichtung ein Kommando zum Einschalten des schwachen Lichts (Nachtlicht) oder des vollen Lichts (Taglicht) gibt.

Bei einer bevorzugten Ausgestaltung der Steuereinrichtung ist dem Signalspeicher eine Schaltstufe nachgeordnet. Die Schaltstufe dient dazu, das Ausgangssignal des Signalspeichers zu verstärken, so dass ein Lastrelais angesteuert werden kann, das dazu dient, die Beleuchtungseinrichtung mit elektrischem Strom zu versorgen, und zwar entweder zur Erzeugung von Taglicht oder Nachtlicht. Gegebenenfalls kann diese Schaltstufe aber entfallen, wenn das Ausgangssignal des Signalspeichers allein in der Lage ist, die Um- oder Zuschaltung der Stromversorgung des Nacht- und/oder Taglichts durchzuführen. Sofern die Schaltstufe vorgesehen ist, weist diese nach einer bevorzugten Ausgestaltung der Erfindung mehrere Ausgänge auf. Mindestens einer dieser Ausgänge dient zur elektrischen Stromversorgung der Beleuchtungseinrichtung. Die anderen Ausgänge können zur Erzielung zusätzlicher gewünschter Schaltfunktionen der Beleuchtungseinrichtung, aber auch anderer Zwecke, dienen. Wenn die Schaltstufe mehrere Ausgänge zur elektrischen Stromversorgung der Beleuchtungseinrichtung aufweist, ist es zweckmäßig, dass der Eingang zur Versorgung einer elektrischen Lichtquelle mit geringer Helligkeit (Nachtlicht) und der andere Ausgang zur Versorgung mindestens einer elektrischen Lichtquelle mit maximaler Helligkeit (Taglicht) dient. Es ist aber auch denkbar, bei Bedarf beide Ausgänge der Schaltstufe zur elektrischen Stromversorgung aller Leuchtquellen einzusetzen. Damit können alle Lichtquellen der Beleuchtungseinrichtung eingeschaltet werden, so dass auch im Taglichtmodus das Nachtlicht eingeschaltet ist.

Die Steuereinrichtung kann alternativ als ein Microcontroller ausgebildet sein. Dieser ist so programmiert, dass er die Aufgabe der zuvor beschriebenen Schaltungseinrichtung wahrnimmt, insbesondere der Zeitglieder, des Logikglieds, des Signalspeichers und/oder der Schaltstufe der Schaltungseinrichtung. Ein solcher Microcontroller ermöglicht besonders einfach die individuelle Einprogrammierung des gewünschten Grenzwerts der Umgebungshelligkeit und/oder der Zeitspanne zur aufeinanderfolgenden Betätigung des Schalters, um den Lichtsensor zu deaktivieren.

Nachfolgend wird ein bevorzugtes Ausführungsbeispiel der erfindungsgemäßen Vorrichtung unter Bezugnahme auf die Zeichnung näher erläutert. In dieser zeigen:
- Fig. 1: eine Prinzipdarstellung der Vorrichtung, und
- Fig. 2: ein Blockschaltbild einer Schalteinrichtung der Vorrichtung gemäß Fig. 1.

Die hier gezeigte Vorrichtung kann zum Beispiel im Schlafzimmerbereich eingesetzt werden, um bei Dunkelheit oder geringer Umgebungshelligkeit zunächst nur elektrisches Licht geringer Leuchtstärke zu erzeugen, was nachfolgend kurz als "Nachtlicht" bezeichnet wird. Wenn im Folgenden des Weiteren vereinfacht nur von "Dunkelheit" die Rede ist, schließt das auch andere Situationen schwacher Lichtverhältnisse, bei denen die Umgebungshelligkeit unterhalb eines bestimmten Grenzwerts liegt, ein. Die gezeigte Vorrichtung dient aber auch dazu, helles Licht zu erzeugen, das über eine deutlich höhere Lichtstärke als das Nachtlicht verfügt. Ein solches helles Licht wird im Folgenden kurz "Taglicht" genannt.

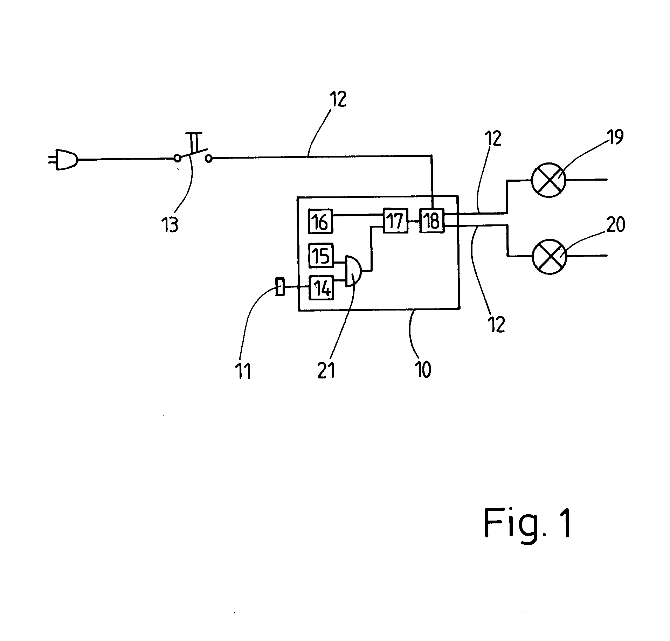

Die in der Fig. 1 gezeigte Vorrichtung verfügt über eine Steuerungseinrichtung 10, die einen Lichtsensor 11 aufweist. Als ein solcher kommt ein Fotowiderstand oder ein Fotohalbleiter in Betracht. Beim Lichtsensor 11 kann es sich konkret um beispielsweise einen Fotosensor (LDR) handeln. Zur Steuerungseinrichtung 10 führt ein Stromkabel 12, dem ein Schalter 13, beispielsweise ein Tastschalter, zugeordnet ist. Die Steuerungseinrichtung 10 kann aber auch direkt an eine Stromverteilung angeschlossen sein, so dass das Stromkabel 12 entfallen kann. Der Schalter 13 befindet sich dann an einer anderen geeigneten Stelle.

Die Steuerungseinrichtung 10 verfügt neben dem Lichtsensor 11 über eine diesem zugeordnete Auswerteinheit 14, über ein erstes Zeitglied, nämlich einen ersten Timer 15, ein zweites Zeitglied, das als zweiter Timer 16 ausgebildet ist, ein als UND-Gatter 21 ausgebildetes Logikelement, einen Signalspeicher 17 und eine Schaltstufe 18. Im Ausführungsbeispiel der Fig. 1 verfügt die Schaltstufe 18 über zwei Ausgänge, wobei es sich um elektrische Leitungen zur Stromversorgung der Beleuchtungseinrichtung handeln kann. Die Beleuchtungseinrichtung verfügt im Ausführungsbeispiel der Fig. 1 über zwei Lichtquellen 19 und 20, wobei die Lichtquelle 19 nur wenig Licht abstrahlt und damit als Nachtlicht dient, während die Lichtquelle 20 mehr Licht abstrahlt, und zwar so viel, dass sie als Taglicht geeignet ist.

Die Steuerungseinrichtung 10 ist so ausgebildet, dass sie bei Dunkelheit, wenn der Lichtsensor 11 von keinem oder nur geringem Umgebungslicht, das unter einem vorgegebenen Grenzwert liegt, beaufschlagt wird, die Lichtquelle 19 für das Nachtlicht eingeschaltet wird. Wenn hingegen das Umgebungslicht über dem Grenzwert liegt, also heller ist, schaltet die Steuerungseinrichtung 10 bei Betätigung des Schalters 13 die Lichtquelle 20 für Taglicht ein. Außerdem ermöglicht die Steuerungseinrichtung 10 - wenn es gewollt ist - auch bei Dunkelheit die Einschaltung der mindestens einen Lichtquelle 20 für Taglicht, und zwar sowohl nach vorheriger Einschaltung des Nachtlichts als auch ohne vorherige Einschaltung des Nachtlichts.

Die Beleuchtungseinrichtung kann abweichend vom gezeigten Ausführungsbeispiel über mehr als zwei Lichtquellen verfügen. Dann sind mehrere Lichtquellen für das Taglicht vorgesehen. Das Nachtlicht wird in der Regel nur durch eine Lichtquelle erzeugt, es können aber auch mehrere Lichtquellen hierzu dienen. Möglich ist es auch, bei mehr als zwei Lichtquellen das Nachtlicht dadurch zu erzeugen, dass nur eine Lichtquelle eingeschaltet wird, während bei Taglicht alle oder die übrigen Lichtquellen aktiviert werden. Wenn das Taglicht durch mehr als eine Lichtquelle erzeugt wird und das Nachtlicht durch nur eine einzige Lichtquelle, ist es denkbar, dass die Lichtquelle des Nachtlichts genauso viel Licht abstrahlt wie jede einzelne Lichtquelle des Taglichts, wobei das Taglicht durch eine Mehrzahl von Lichtquellen gebildet wird, und vorzugsweise dann das eine Nachtlicht mit einbezogen wird.

Es ist auch denkbar, dass die Beleuchtungseinrichtung nur eine einzige Lichtquelle aufweist. Bei Dunkelheit, wenn der Lichtsensor 11 mit keinem oder wenig Umgebungslicht beaufschlagt wird, wird dann die einzige Lichtquelle gedimmt durch Reduzierung des Stroms und/oder der Spannung zur Versorgung dieser Lichtquelle im Nachtlichtmodus. Wenn hingegen über dem Grenzwert liegendes Umgebungslicht auf den Lichtsensor 11 einfällt, wird die einzige Lichtquelle mit voller elektrischer Energie versorgt, so dass sie maximales Licht erzeugt. In diesem Falle braucht nur eine einzige elektrische Zuleitung vorhanden zu sein, so dass die Schaltstufe 18 auch nur einen Ausgang aufweist.

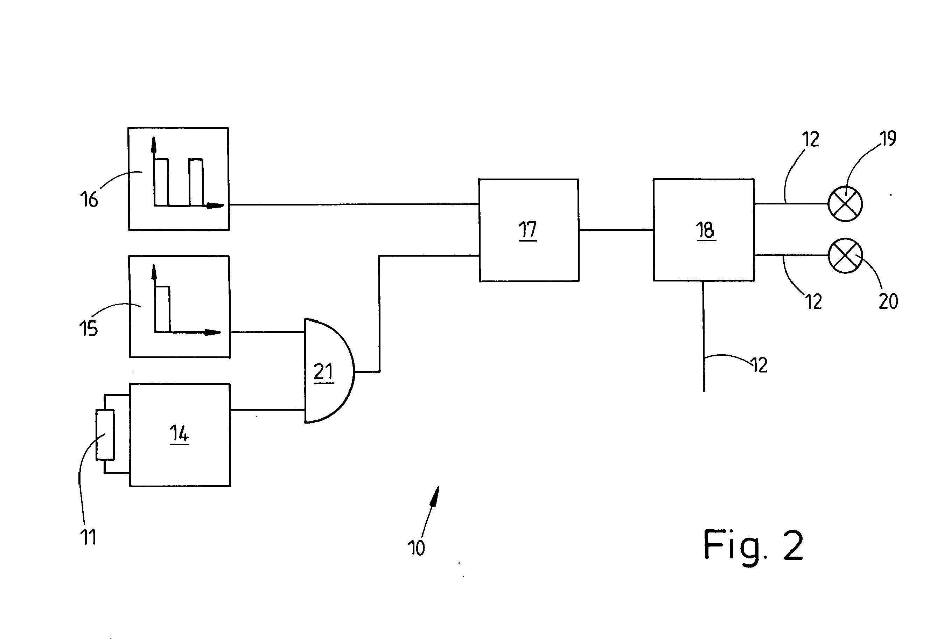

Die Fig. 2 zeigt ein Blockschaltbild der Steuerungseinrichtung 10. Demnach ist der Lichtsensor 11 der Auswerteinheit 14 zugeordnet. Die Auswerteinheit 14 wertet das Signal des Lichtsensors 11, wobei es sich vorzugsweise um einen Fotowiderstand (LDR) handelt, aus. Bei Dunkelheit oder einer Umgebungshelligkeit unter dem vorbestimmten Grenzwert erzeugt die Auswerteinheit 14 aus dem Messwert des Lichtsensors 11 ein Signal am Ausgang der Auswerteinheit 14. Bei über dem Grenzwert liegender Umgebungshelligkeit erzeugt die Auswerteinheit 14 aus dem vom Lichtsensor 11 aufgenommenen Wert kein Signal. Der erste Timer 15, nämlich das von ihm ausgehende Signal, ist zusammen mit dem Signal der Auswerteinheit 14 zu einem Logikglied geführt, bei dem es sich bevorzugt um das UND-Gatter 21 handelt. Der erste Timer 15 und die Auswerteinheit 14 sind dem Eingang des UND-Gatters 21 zugeordnet. Am Ausgangs des UND-Gatters 21 wird ein Signal erzeugt, wenn das UND-Gatter 21 sowohl von der Auswerteinheit 14 als auch vom ersten Timer 15 ein Signal erhält. Der erste Timer 15 erzeugt ein Signal von kurzer Dauer, beispielsweise zwischen 0,1 und 0,2 Sekunden, sobald eine Stromversorgung erfolgt, nämlich der Schalter 13 einmal betätigt worden ist. Dieses Signal wird vom ersten Timer 15 aber nur dann erzeugt, wenn dieser vorher mindestens mehrere Sekunden, beispielsweise zwei bis vier Sekunden, ausgeschaltet war. Wird hingegen nach dem ersten Einschalten durch Betätigung des Schalters 13 innerhalb einer kurzen Zeit, beispielsweise 2 bis 4 Sekunden, durch erneutes Betätigen des Schalters 13 der erste Timer 15 wieder eingeschaltet, wird von diesem kein Signal erzeugt. Dann gibt auch das UND-Gatter 21 am Ausgang kein Signal ab, und zwar auch dann nicht, wenn die Auswerteinheit 14 ein Signal erzeugt, weil der Lichtsensor 11 kein Licht oder nur geringes Licht unterhalb des Grenzwerts der Umgebungshelligkeit empfängt.

Der zweite Timer 16 erzeugt ein kurzes Signal, nämlich einen Impuls von weniger als 1 Sekunde, vorzugsweise weniger als 0,1 Sekunden, immer wenn der Schalter 13 betätigt wird. Der Impuls des zweiten Timers 16 wird dem Steuereingang des Signalspeichers 17 zugeführt. Das Signal des UND-Gatters 21 wird ebenfalls dem Signalspeicher 17 zugeführt, und zwar dem Dateneingang.

Der Signalspeicher 17 überträgt das über den Dateneingang kommende Signal des UND-Gatters 21 zum Ausgang, solange ein Impuls des zweiten Timers 16 am Steuereingang anliegt. Da dieser Impuls vom zweiten Timer 16 nur kurz ist, wird im Signalspeicher 17 der zuletzt anliegende Zustand des Dateneingangs vom UND-Gatter 21 gespeichert.

Die Schaltstufe 18 dient als Verstärker des vom Ausgang des Signalspeicher 17 kommenden Signals. Das verstärkte Signal dient zur Steuerung eines Lastrelais, das die Stromversorgung der Lichtquelle 19 für das Nachtlicht oder der Lichtquelle 20 für das Taglicht schaltet.

Die Schaltstufe 18 dient somit zur Umschaltung zweier Stromkreise für Tag- und Nachtlicht. Das Signal am Ausgang der Schaltstufe 18 kann aber auch andere Funktionen auslösen, beispielsweise die Zuschaltung des Stromkreises für das Nachtlicht, wenn das Taglicht eingeschaltet ist, die Umschaltung mehrerer Widerstandswerte zum Ansteuern eines Dimmers, wenn die Beleuchtungseinrichtung über nur eine einzige Lichtquelle verfügt oder alle Lichtquellen sowohl Nachtlicht (mit geringer Lichtabgabe) oder alternativ auch Taglicht erzeugen sollen. Schließlich kann das Ausgangssignal der Schaltstufe 18 auch noch andere Funktionen ausführen, beispielsweise eine elektrische Jalousienbetätigung.

Bei einer alternativen Vorrichtung kann die Schaltstufe 18 entfallen, wenn es möglich ist, direkt mit dem Ausgangssignal des Signalspeichers 17 mindestens einige der zuvor genannten Funktionen zu schalten, insbesondere die Umschaltung des Stromkreises für Tag- und Nachtlicht und/oder die Zuschaltung eines Stromkreises für Nachtlicht.

Nachfolgend wird die Funktion der zuvor beschriebenen Steuerungseinrichtung 10 erläutert:
Zunächst wird davon ausgegangen, dass es dunkel ist oder nur eine unter dem gegebenenfalls einstellbaren oder einprogrammierbaren Grenzwert liegende Umgebungshelligkeit vorherrscht. Vom Lichtsensor 11 wird dann in der Auswerteinheit 14 ein Lichtsignal erzeugt, dass dem UND-Gatter 21 zugeführt wird. Wird nun erstmals der Schalter 13 nur einmal betätigt, nachdem er zuvor lange Zeit beispielsweise mehr als 2 Sekunden nicht betätigt worden ist, erzeugt der erste Timer 15 ein Signal, vorzugsweise einen kurzen Impuls, so dass an beiden Eingängen des UND-Gatters 21 ein Impuls bzw. ein Signal anliegt und das UND-Gatter 21 dem Dateneingang zum Signalspeicher 17 ein Signal bzw. einen Impuls zuführt. Dieses Signal oder dieser Impuls führt dazu, dass die Schaltstufe 18 die Lichtquelle 19 für das Nachtlicht aktiviert, die Beleuchtungseinrichtung somit Nachtlicht mit geringer Leuchtstärke abgibt.
Wird bei Dunkelheit, also einem vom Lichtsensor 11 und die diesem zugeordnete Auswerteinheit 14 erzeugten Signal innerhalb einer kurzen Zeit, beispielsweise innerhalb von 2 bis 4 Sekunden, der Schalter 13 erneut betätigt, erzeugt der erste Timer 15 keinen Impuls mehr. Die Zeit, innerhalb derer der Schalter 13 erneut betätigt werden muss, damit der erste Timer 15 kein Signal mehr erzeugt, ist vorzugsweise individuell veränderbar. Demzufolge wird vom UND-Gatter 21 kein Signal zum Dateneingang des Signalspeichers 17 abgegeben. Der zweite Timer 16 erzeugt aber einen kurzen Impuls, nachdem der Schalter 13 erneut betätigt worden ist. Dieser Impuls gelangt über den Steuereingang zum Signalspeicher 17. Dieser speichert nach dem Impuls, wenn am Steuereingang kein Signal mehr anliegt, den zuletzt am Dateneingang des Signalspeichers 17 anliegenden Zustand, nämlich kein vom UND-Gatter 21 abgegebenes Signal. Aufgrund dieses Zustands wird vom Signalspeicher 17 über die Schaltstufe 18 das in derselben enthaltene Lastrelais umgeschaltet, wodurch eine Umschaltung von der Lichtquelle 19 (Nachtlicht) zur Lichtquelle 20 (Taglicht) erfolgt.
Bei über dem Grenzwert liegender Umgebungshelligkeit erzeugt der Lichtsensor 11 kein Signal. Selbst wenn dann nur einmal der Schalter 13 betätigt wird, gibt das UND-Gatter 21 kein Signal über den Dateneingang zum Signalspeicher 17 ab. Es läuft dann der gleiche Vorgang ab, der zuvor nach zweimaligem Betätigen des Schalters 13 zur Umschaltung der Beleuchtungseinrichtung von dem Nachtlichtmodus in den Taglichtmodus erfolgt. Beim Dateneingang des Signalspeichers 17 liegt also kein Signal an. Dieser Zustand wird nach einem kurzen Impuls vom zweiten Timer 16 auf den Dateneingang des Signalspeichers 17 von demselben gespeichert. Über die Schaltstufe 18 wird dann Taglicht eingeschaltet.
Prinzipiell arbeitet die Steuerungseinrichtung genauso bei den eingangs genannten alternativen Ausgestaltungsmöglichkeiten der erfindungsgemäßen Vorrichtung, insbesondere bei einer größeren Anzahl von Leuchtquellen, aber auch nur einer einzigen Leuchtquelle. Auch hier wird das gleiche erfindungsgemäße Prinzip verwirklicht, nämlich beim Einschalten der Stromversorgung und dunklem Lichtsensor 11 wird nicht das Nachtlicht aktiviert, sondern das Taglicht und dieser Schaltzustand gespeichert. Bei schnellem Aus- und Wiedereinschalten der Stromversorgung durch mehrmalige kurz aufeinanderfolgende Betätigung des Schalters 13 und dunklem Lichtsensor 11 wird die Nachtlichtschaltung nicht aktiviert und dieser Schaltzustand ebenso gespeichert. Genauso wird bei hellem Lichtsensor 11 nur Taglicht aktiviert und dieser Schaltzustand gespeichert.
Eine alternative Steuerungseinrichtung kann auch gebildet sein durch einen Microcontroller. Der Microcontroller ist so programmiert, dass er programmtechnisch die Funktion der Zeitglieder, des Logikglieds, des Signalspeichers und/oder der Schaltstufe der zuvor beschriebenen Steuerungseinrichtung 10 wahrnimmt. Der Microcontroller arbeitet dadurch ohne elektrische oder elektronische Bauelemente der zuvor beschriebenen Steuerungseinrichtung 10. Die Funktion dieser elektronischen Bauelemente, insbesondere der Zeitglieder, des Logikglieds, des Signalspeichers und/oder Schaltstufe, werden dann vom im Microcontroller hinterlegten Programm ausgeführt. An der Stelle von Signalen, die die elektronischen Bauelemente der zuvor beschriebenen Steuerungseinrichtung 10 erzeugen, werden vom Microcontroller entsprechende Schaltvorgänge erzeugt oder ausgelöst. Der Microcontroller kann individuell programmiert werden, wobei das Programm wenigstens teilweise bedarfsweise geändert werden kann. Insbesondere sind der Grenzwert der Umgebungshelligkeit, bei dem der Lichtsensor anspricht, und/oder Schaltabstände des Schalters zum Deaktivieren des Lichtsensors vom Anwender individuell den Bedürfnisse entsprechend anpassbar.

### Bezugszeichenliste:

- 10: Steuerungseinrichtung
- 11: Lichtsensor
- 12: Stromkabel
- 13: Schalter
- 14: Auswerteinheit
- 15: erster Timer
- 16: zweiter Timer
- 17: Signalspeicher
- 18: Schaltstufe
- 19: Lichtquelle (Nachtlicht)
- 20: Lichtquelle (Taglicht)
- 21: UND-Gatter

## Patentansprüche

1. Vorrichtung zur Steuerung einer Beleuchtungseinrichtung mit einer mindestens einen Lichtsensor (11) aufweisenden Steuerungseinrichtung (10) zur Beeinflussung der der Beleuchtungseinrichtung zuführbaren elektrischen Leistung in Abhängigkeit von der auf den Lichtsensor (11) einfallenden Umgebungshelligkeit, **dadurch gekennzeichnet, dass** bei einer unterhalb eines Grenzwerts liegender Umgebungshelligkeit von der Steuerungseinrichtung (10) die Beleuchtungseinrichtung mit verminderter elektrischer Energie versorgbar ist oder mindestens eine weniger helle Lichtquelle (19) der Beleuchtungseinrichtung einschaltbar ist.

2. Vorrichtung nach Anspruch 1, **dadurch gekennzeichnet, dass** die Beleuchtungseinrichtung mindestens zwei Lichtquellen (19, 20) mit unterschiedlichen Helligkeiten aufweist, die von der Steuerungseinrichtung (10) in Abhängigkeit von der vom Lichtsensor (11) erfassten Umgebungshelligkeit individuell betätigbar sind, indem bei unter dem Grenzwert liegender Umgebungshelligkeit die Steuerungseinrichtung (10) nur die mindestens eine Lichtquelle (19) mit verminderter elektrischer Leistung versorgt, wobei vorzugsweise der Grenzwert der Umgebungshelligkeit, die der Lichtsensor (11) erfasst, veränderbar ist.

3. Vorrichtung nach Anspruch 1 oder 2, **dadurch gekennzeichnet, dass** in Abhängigkeit von der mittels des Lichtsensors (11) erfassten Umgebungshelligkeit von der Steuerungseinrichtung (10) die Beleuchtungseinrichtung mit veränderbarer elektrischer Leistung, insbesondere veränderbarem Strom und/oder veränderbarer Spannung, versorgbar ist.

4. Vorrichtung nach einem der vorhergehenden Ansprüche, **dadurch gekennzeichnet, dass** der Steuerungseinrichtung (10) mindestens ein manuell betätigbarer Schalter (13) zugeordnet ist, wobei ein einmaliges Betätigen des Schalters (13) den Lichtsensor (11) aktiviert und bei einem kurz aufeinanderfolgenden mehrmaligen Betätigen des Schalters (13) der Lichtsensor (11) deaktiviert ist.

5. Vorrichtung nach einem der vorhergehenden Ansprüche, **dadurch gekennzeichnet, dass** dem Lichtsensor (11) eine Auswerteinheit (14) zugeordnet ist, die das Signal des Lichtsensors (11) auswertet und ein definiertes Signal und/oder einen Impuls einer bestimmten (kurzen) Zeitdauer erzeugt bzw. einen Schaltvorgang auslöst, wenn die Umgebungshelligkeit über oder unter dem Grenzwert liegt.

6. Vorrichtung nach einem der vorhergehenden Ansprüche, **dadurch gekennzeichnet, dass** die Steuerungseinrichtung (10) mindestens zwei Zeitglieder (Timer 15, 16) aufweist, wobei ein erstes Zeitglied (Timer 15) ein Signal und/oder einen Impuls an die Steuerungseinrichtung (10) abgibt, wenn der Schalter (13) einmal betätigt worden ist und das andere (zweite) Zeitglied (Timer 16) nur dann ein Signal und/oder einen Impuls an die Steuerungseinrichtung (10) abgibt, wenn innerhalb eines bestimmten Zeitraums der Schalter (13) mindestens zweimal betätigt worden ist, wobei der Zeitraum vorzugsweise individuell veränderbar ist.

7. Vorrichtung nach einem der vorhergehenden Ansprüche, **dadurch gekennzeichnet, dass** dem ersten Zeitglied (Timer 15) der Lichtsensor (11) mit insbesondere der Auswerteinheit (14) derart zugeordnet ist, dass ein Signal des ersten Zeitglieds (Timer 15) und des Lichtsensors (11) bzw. der Auswerteinheit (14) zu einem Logikglied, insbesondere einem UND-Gatter (21) geführt ist das ein Ausgangssignal erzeugt, wenn der Schalter (13) nur einmal innerhalb eines bestimmten Zeitintervalls betätigt worden ist und die vom Lichtsensor (11) umfasste Umgebungshelligkeit unter dem Grenzwert liegt.

8. Vorrichtung nach einem der vorhergehenden Ansprüche, **dadurch gekennzeichnet, dass** das zweite Zeitglied (Timer 16) einen Impuls erzeugt, insbesondere einen kurzen Impuls erzeugt, wenn der Schalter (13) betätigt wird, insbesondere bei jeder Betätigung des Schalters (13).

9. Vorrichtung nach einem der vorhergehenden Ansprüche, **dadurch gekennzeichnet, dass** dem Logikglied (UND-Gatter 21) und dem zweiten Zeitglied (Timer 16) ein Signalspeicher (17) nachgeordnet ist, der einen Eingang, insbesondere einen Steuereingang, für den Impuls des zweiten Zeitglieds (Timer 16) und einen Eingang, insbesondere einen Dateneingang, für das Signal des Logikglieds (UND-Gatter 21) aufweist, wobei vorzugsweise der Signalspeicher (17), wenn er keinen Impuls über den Steuereingang erhält, also am Steuereingang logisch ein 0-Signal anliegt, den zuletzt anliegenden Zustand des Dateneingangs speichert, insbesondere unabhängig davon, ob über den Dateneingang das Logikglied (UND-Gatter 21) ein Signal (logisch: 1) oder kein Signal (logisch: 0) abgibt.

10. Vorrichtung nach einem der vorhergehenden Ansprüche, **dadurch gekennzeichnet, dass** dem Ausgang des Signalspeichers (17) eine Schaltstufe (18) zugeordnet ist, die das vom Signalspeicher (17) stammende Ausgangssignal verstärkt zur Betätigung insbesondere eines Lastrelais zum Ein- und Ausschalten der elektrischen Stromversorgung der Beleuchtungseinrichtung, und vorzugsweise die Schaltstufe (18) mehrere Ausgänge aufweist, von denen mindestens einer zur elektrischen Stromversorgung der Beleuchtungseinrichtung dient.

11. Vorrichtung nach einem der vorhergehenden Ansprüche, **dadurch gekennzeichnet, dass** die Schaltstufe je einen Ausgang zur elektrischen Stromversorgung einer von mehreren Lichtquellen (19, 20) der Beleuchtungseinrichtung aufweist.

12. Vorrichtung nach einem der vorhergehenden Ansprüche, **dadurch gekennzeichnet, dass** die Steuerungseinrichtung als ein Microcontroller ausgebildet ist, und/oder die Beleuchtungseinrichtung mindestens eine Lichtquelle zur Abgabe einer geringen Lichtmenge (Nachtlicht) und mindestens eine Lichtquelle zur Abgabe einer größeren Lichtmenge (Taglicht) aufweist.
